# EUROPEAN PATENT APPLICATION

(11) **EP 2 134 096 A1**
(43) Date of publication of application: **16.12.2009**
(21) Application number: 08305266.2
(22) Date of filing: 13.06.2008
(51) Int. Cl.: H04N 7/26

(54) **Method and device for encoding video data in a scalable manner using a hierarchical motion estimator**

(71) Applicant: Thomson Licensing, 92100 Boulogne-Billancourt (FR)
(72) Inventor: Urban, Fabrice, 92648 Boulogn Cedex (FR); Nezan, Jean-François, 92648 Boulogn Cedex (FR); Raulet, Mickael, 92648 Boulogn Cedex (FR); Guillotel, Philippe, 92648 Boulogn Cedex (FR)
(74) Representative: Huchet, Anne

(57) **Abstract**

The invention concerns a device for encoding video data in a scalable manner comprising
- a scalable video encoder for encoding said video data according to n different layers and
- a motion estimator,

According to the invention, a sub-resolution set of images to be encoded is computed by the scalable video encoder or by the motion estimator,
said motion estimator uses motion computed at a lower resolution for computing the motion of the current resolution layer, and provides motion vectors associated with each resolution layer to the scalable video encoder for encoding the corresponding layer.

## Description

Thanks to the improvement of video compression and communication systems the broadcasting of video sequences is more and more widespread. However, high definition video has to be compressed in order to meet transmission bandwidth. Motion Estimation (ME) is known to be a key operation for video compression. A highly accurate motion estimation can significantly reduce the bit-rate of a video stream, but involves a high computational complexity. A real-time HD video coder for embedded devices have to cope with always limited hardware resources to reach the better quality as possible.

The high performance of H.264 is mainly due to improved motion compensation modes such as variable block-size motion compensation, multiple reference pictures and Fractional accuracy Motion Estimation (FME). However the introduction of numerous modes raises the complexity of the codec and makes real-time H.264 compression challenging, especially for high-definition video. On top of that H.264 SVC standard provides scalability features to manage, store and distribute video content towards multiple kinds of terminals and over different access technologies. A single SVC bitstream is used instead of one AVC bitstream per terminal, saving the global avalaible bandwidth. Integer Motion Estimation (IME) has been widely studied in the past few years. Fast algorithms have been developed to reduce the computational burden without decreasing quality. The goal of this paper is to study ME algorithms and their use in new standards in terms of both quality and complexity. Video compression has recently become an important feature of 3G cell phones, personal digital assistants, and other battery-powered devices. This kind of devices is very often based on Digital-Signal Processors (DSP) to optimize the performance-consuption ratio. Video codecs are also needed in base stations for inline transcoding or in Real-time H.264 HD video encoding solutions. Here again DSP are widely chosen in multiple components and/or multiple cores hardware platforms. Motion estimation goal is to find relative motion between two images in order to eliminate temporal redundancy. Different means of estimating the movement can be found in the literature. Gradient-based pel-recursive algorithms produce a dense motion field (each pixel of the picture has an associated motion vector). Such a result is useful for feature tracking, desinterlacement filters or standard conversion, but is not suited to video compression where the picture is usually divided into blocks. Phase correlation techniques relie on mathematical properties of Fourier transforms. The resulting motion field has some interesting properties: it corresponds to real motion and is robust to luminance variations. However, the computation load is important and real motion is not always the suited to video coding. Actually motion estimation goal is to find a match between the current block and a reference picture. For video compression, Block Matching Algorithms (BMA) are thus most widely preferred.

According to the prior art hierarchical motion estimators are not used in combination with scalable video encoders.

The invention proposes an efficient method to use a unified hierarchical structure for both a hierarchical motion estimator and a scalable video encoder with different scalability layers.

The invention proposes a device for encoding video data in a scalable manner comprising
- a scalable video encoder for encoding said video data according to n different layers and
- a motion estimator,

According to the invention, a sub-resolution set of images to be encoded is computed by the scalable video encoder or by the motion estimator,
said motion estimator uses motion computed at a lower resolution for computing the motion of the current resolution layer, and provides motion vectors associated with each resolution layer to the scalable video encoder for encoding the corresponding layer.

The invention therefore enables to reuse the motion computed at a lower resolution level in a motion prediction step of the motion estimation for the current level, and transmits the motion vectors of each level to the scalable video encoder. Thanks to the invention, the same image decomposition is used for motion estimation and for scalable video encoding, the decomposition can be performed either by the scalable video encoder or by the motion estimator.

The proposed invention therefore enables a faster encoding as there is a single decomposition of the image used for the video encoding and the motion estimation. It reduces also the hardware requirements. The video encoder can also benefit of the greater performances of a hierarchical motion estimator which handles a greater motion range compared to other motion estimators at similar complexity. It also improves the compression performances of the video coder since the encoding cost of the motion vectors benefit from the hierarchical motion prediction from one layer to the other one.

The invention proposes also a method for encoding video data in a scalable manner comprising
- a scalable video encoding step for encoding said video data according to n different layers and
- a motion estimation step,

According to the invention, a sub-resolution set of images to be encoded is computed either during the scalable video encoding step or during the motion estimation,
said motion estimation uses motion computed at a lower resolution for computing the motion of the current resolution layer, and provides motion vectors associated with each resolution layer to the scalable video encoding step for encoding the corresponding layer.

Other characteristics and advantages of the invention will appear through the description of a non-limiting embodiment of the invention, which will be illustrated, with the help of the enclosed drawing.
- Figure 1 represents a scalable video encoder using a state of the art motion estimator,
- Figure 2 represents a scalable video encoder using a hierarchical motion estimator,
- Figure 3 represents a multi resolution decomposition,
- Figure 4 represents an embodiment of a hierarchical motion estimator,
- Figure 5 represents a motion field computation process block diagram,
- Figure 6 represents a pyramid of pictures in the hierarchical motion estimator.

The represented modules are functional units, which can correspond or not to units physically different. For instance, some modules or part of them can be grouped in a single component, or can constitute the functionalities of a same software. Some modules can also comprise physically distinguishable entities.

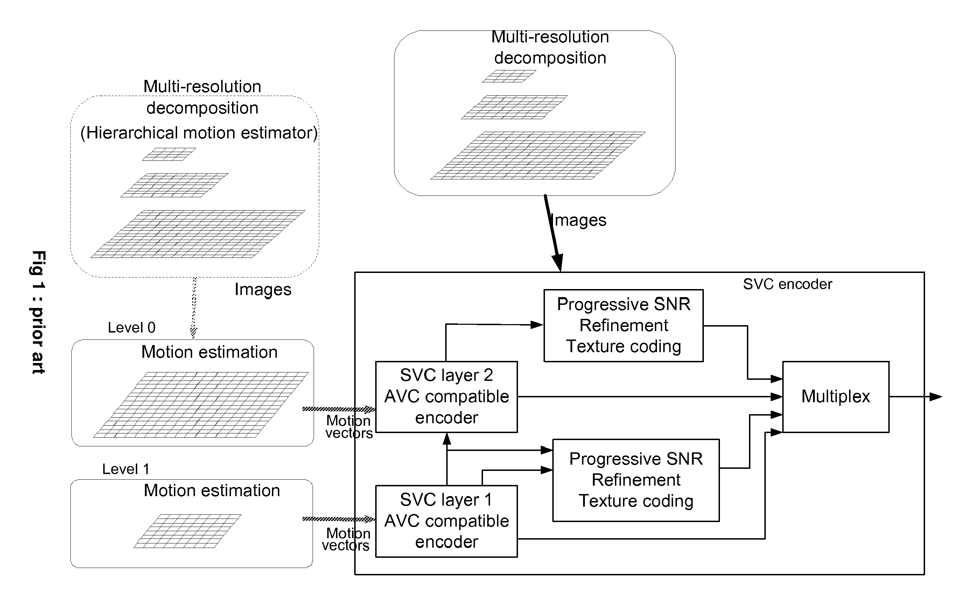

Figure 1 represents a scalable video encoder and the associated motion estimator according to the prior art.

It is known to associate a traditional motion estimator with a scalable video encoder.

A multi-resolution decomposition of the image is done by down-sampling the video frames using a low-pass filter

One multi-resolution decomposition is done for the scalable video encoder and another one for the motion estimator.

The motion estimator estimates the motion for each of the sub-resolution images obtained by the multi-resolution decomposition. In figure 1, the motion estimator is not hierarchical.

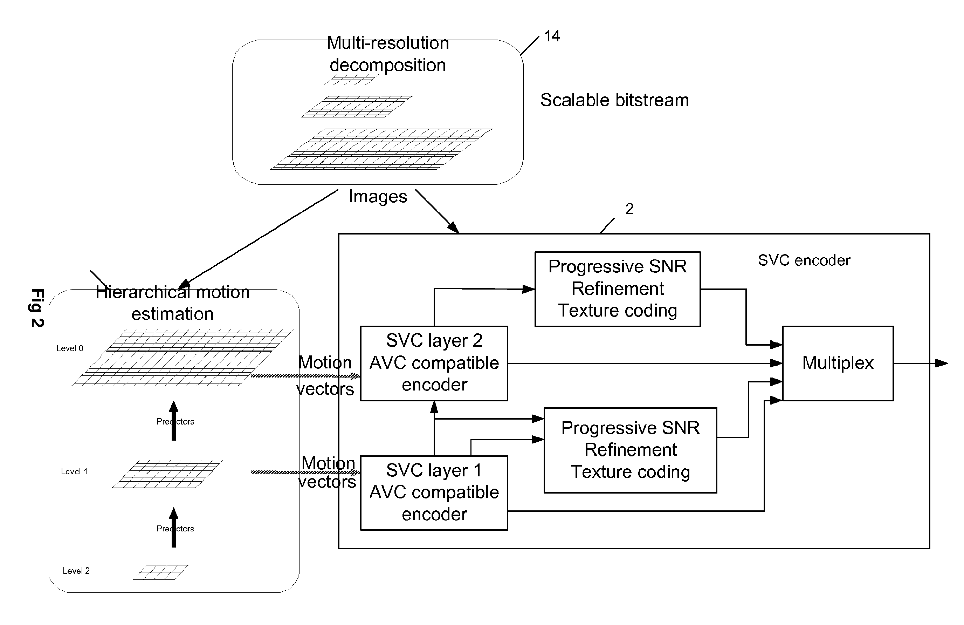

- Figure 2 represents a scalable video encoder using a hierarchical motion estimator and a multi resolution decomposition module 14.

The Hierarchical Motion Estimator (HME) 1 is based on a multi-level refinement process where the motion vectors are first coarsely estimated on a sub-sampled picture. The algorithm starts by building a pyramid of pictures. Level 0 is the full-resolution picture, the level n + 1 is level n low-pass filtered and sub-sampled picture. A sub-sampled motion field is firstly estimated on the low resolution picture (highest level), then the motion field is successively refined. The block size through the pyramid is constant so that global motions are detected on the coarsest levels and refinement is achieved when resolution is increased. Details are detected when resolution is increased. A motion estimation is realized for each level. There are a prediction and a refinement steps. Predictors can be: no motion, spatial, temporal and hierarchical predictors. The pyramidal approach provides reliable motion predictors. The refinement step is a full search around the best predictor. n addition to the motion estimation operations, HME implementation takes into account the computation of the subsampled pictures pyramid. Each level is a sub-sampled picture of the lower level's to which a 3-tap Gaussian low-pass filter is applied.

The local search and predictive mechanism naturally provides a low entropy homogeneous motion field. This is an advantage for video compression. In figure 1, the motion estimator is not hierarchical. A straight forward use of a HME in SVC would lead to another decomposition.

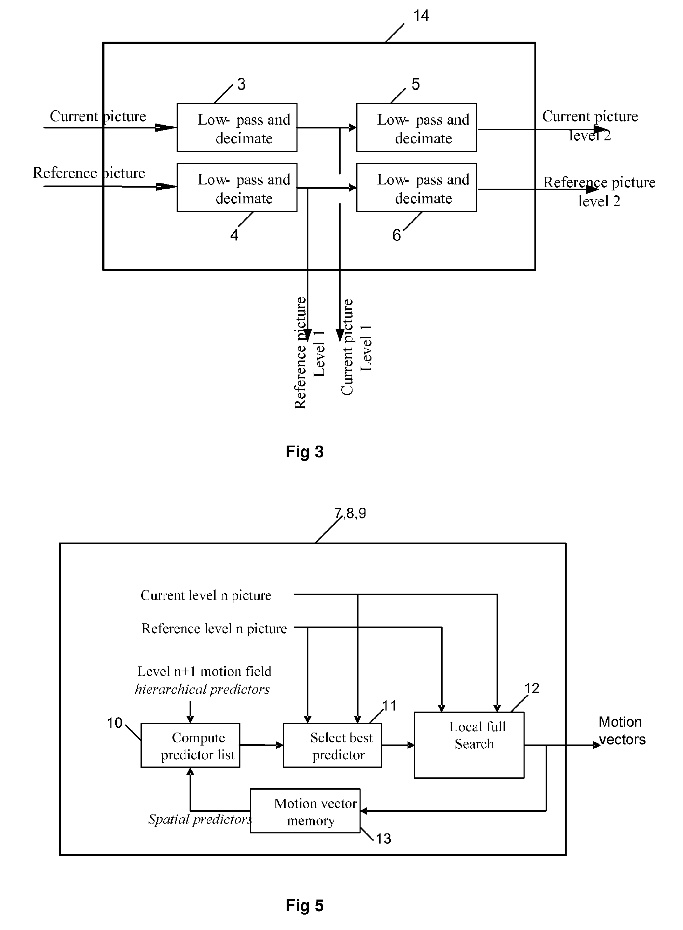

Figure 3 represents the multi-resolution decomposition module 14.

This module as mentioned earlier can be integrated in the hierarchical motion estimator or in the scalable video encoder.

It comprises 4 modules to low-pass and decimate the signal. Module 3 is in charge of low-pass filtering and decimating the current picture, and module 5 is in charge of low-pass filtering and decimating the output signal of module 3. Module 4 is in charge of low-pass filtering and decimating the reference picture, and module 6 is in charge of low-pass filtering and decimating the output signal of module 4.

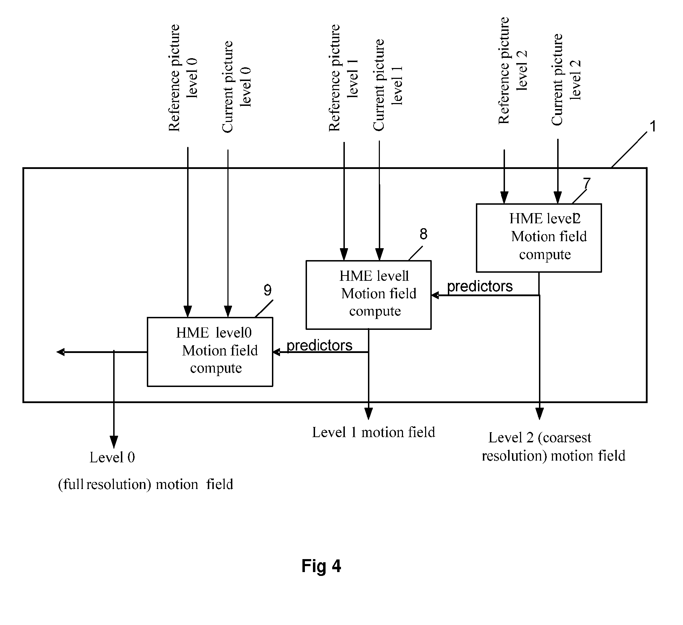

Figure 4 represents a hierarchical motion estimator 1.

The motion estimator 1 can be of

The hierarchical motion estimator comprises three modules for motion estimation and predictors computing. This motion estimator comprises a first motion estimator 7 in charge of computing the motion vectors for the lower level 2. It receives as input the reference picture level 2 and the current picture 2 output by modules 5 and 6 of module 14. It outputs the level 2 motion vectors which are used by the scalable video encoder. It also computes the predictors which are transmitted to a motion estimator 8 in charge of computing the motion vectors for layer 1. The module 8 receives as input the reference picture layer 1 and the current picture layer 1 computed respectively by the modules 4 and 3. This module 8 provides also some predictors to a motion estimator 9 and outputs the layer 1 motion vectors which are used by the scalable video encoder. The module 9 receives as input the reference picture layer 0 and the current picture layer 0. The module 9 provides the layer 0 motion vectors which are used by the scalable video encoder.

The output signals of modules 5 and 6 are transmitted to a module 7 in charge of computing the motion fields of layer 2. Layer 2 is the lowest resolution layer in the present embodiment.

The motion vectors obtained for this layer are then computed and sent to a module 8 in charge of computing the motion vectors of layer 1, higher level than level 2.

The motion vectors calculated by module 8 are then sent to a module 9 in charge of computing the motion vectors for layer 0, the higher resolution level.

The hierarchical motion estimator 1 comprises 4 modules to low-pass and decimate the signal. Module 3 is in charge of low-pass filtering and decimating the current picture, and module 5 is in charge of low-pass filtering and decimating the output signal of module 3. Module 4 is in charge of low-pass filtering and decimating the reference picture, and module 6 is in charge of low-pass filtering and decimating the output signal of module 4.

The output signals of modules 5 and 6 are transmitted to a module 7 in charge of computing the motion fields of layer 2. Layer 2 is the lowest resolution layer in the present embodiment.

The motion vectors obtained for this layer are then computed and sent to a module 8 in charge of computing th emotion vectors of layer 1, higher level than level 2.

The motion vectors calculated by module 8 are then sent to a module 9 in charge of computing the motion vectors for layer 0, the higher resolution level.

Modules 7, 8 and 9 are common motion estimators known from the man skilled in the art.

Figure 5 represents any of the motion estimators 7, 8 or 9.

Such a motion estimator comprises a module 10 for computing a predictor list. Several predictors are selected from hierarchical predictors, spatial predictors, or even temporal predictors or other. The output of module 10 is connected to the input 11 In the highest resolution level, where no hierarchical predictor is available, the motion is only predicted with spatial and eventually temporal or other predictors. The local full search can be enlarged to compensate a poor prediction. In the case where no prediction is available, the default search center is the initial position (null motion vector predictor).

The module 11 selects the best motion predictor after evaluation (ex: SAD computation). The output of module 11 is connected to the input of module 12 which performs the refinement of the best predictor (block matching using SAD for example). It can be a local full search or diamond search for example. The refinement accuracy can be pixel or sub-pixel (1/4 pixel for AVC and SVC). Modules 11 and 12 receive also as input the current level n picture and the reference level n picture.

The output of module 12 is connected to the input of a memory 13. The memory 13 stores computed motion vectors to be used for spatial motion vector prediction.

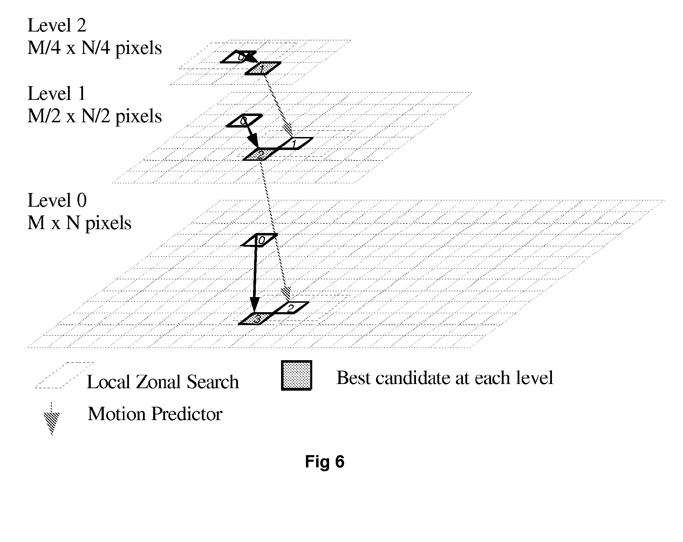

The figure 6 shows a 3-resolution-level motion estimator. Motion estimation starts at level 2. For each block, a vector is computed using a prediction step involving spatial predictors, and a refinement step around the best predictor. At this level the refinement search range is enlarged to cope with the lack of hierarchical predictor. Then motion estimation of resolution level 1 is performed. Results of level 2 are used in the prediction step (grey arrows). The refinement step can be very localized thanks to robust prediction (spatial+hierarchical and even temporal or other).
Then level 0 (full resolution) motion estimation is performed using results of level 1 as predictors.

## Claims

1. Device for encoding video data in a scalable manner comprising
- a scalable video encoder for encoding said video data according to n different layers and
- a motion estimator,
**characterized in that** a sub-resolution set of images to be encoded is computed by the scalable video encoder or by the motion estimator, said motion estimator uses motion computed at a lower resolution for computing the motion of the current resolution layer, and provides motion vectors associated with each resolution layer to the scalable video encoder for encoding the corresponding layer.

2. Method for encoding video data in a scalable manner comprising
- a scalable video encoding step for encoding said video data according to n different layers and
- a motion estimation step,
**characterized in that** a sub-resolution set of images to be encoded is computed either during the scalable video encoding step or during the motion estimation,
said motion estimation uses motion computed at a lower resolution for computing the motion of the current resolution layer, and provides motion vectors associated with each resolution layer to the scalable video encoding step for encoding the corresponding layer.
